# EUROPEAN PATENT SPECIFICATION

(11) **EP 0 905 687 B1**
(45) Date of publication and mention of the grant of the patent: **10.09.2003**
(21) Application number: 98118028.4
(22) Date of filing: 23.09.1998
(51) Int. Cl.: G11B 17/04, G11B 25/04

(54) **Disk drive**
Plattenlaufwerk
Entrainement de disque

(30) Priority: 26.09.1997 JP 26161197
(43) Date of publication of application: 31.03.1999
(73) Proprietor: MATSUSHITA ELECTRIC INDUSTRIAL CO., LTD., Kadoma-shi, Osaka-fu (JP)
(72) Inventor: Ariyoshi, Yuji, Toyonaka-shi, Osaka-fu, 561-0802 (JP)
(74) Representative: Eisenführ, Speiser & Partner

(56) References cited:
- EP-A- 0 438 829
- EP-A- 0 666 562
- US-A- 5 237 471

## Description

### BACKGROUND OF THE INVENTION

The present invention relates to disk drives, and more particularly, to a disk drive which is applied to a disk of, for example, the so-called MD (minidisk) or the like including a recording and/or reproducing medium encased in a disk cartridge and is provided for recording information on the medium or reproducing the information recorded on the medium.

As a disk drive to be applied to a disk of, for example, the so-called MD (minidisk) or the like including a recording and/or reproducing medium encased in a disk cartridge, there has conventionally been generally known a disk drive provided with a recording and reproducing means for recording information on the recording and/or reproducing medium encased in a disk cartridge or reproducing the information recorded on the medium, a holder means for guiding and holding the disk cartridge that is being inserted, a loading means capable of transferring the disk cartridge between a mounting and dismounting position where the disk cartridge can be mounted on and dismounted from the holder means and a recording and reproducing position of the recording and reproducing means and a drive means capable of driving the loading means. For example, the prior art references of Japanese Patent Laid-Open Publication No. HEI 6-267124, Japanese Patent Laid-Open Publication No. HEI 8-102118, Japanese Patent Laid-Open Publication No. HEI 8-171765 and Japanese Patent Laid-Open Publication No. HEI 8-180625 and so on disclose the detailed constructions of such a disk drive.

The above disk drive is provided with a chassis that serves as a mounting base for the principal constituent means such as the aforementioned recording and reproducing means, holder means, loading means and drive means, and many of the constituent elements and other accessory components of the aforementioned means are fixed and held by or engaged with the chassis directly or via mounting members.

This chassis is normally made of a metal panel of steel or the like and totally formed roughly into a flat-plate-like shape, however, the plate is practically not a complete flat plate. Observing the concrete construction in detail, the plate has various bracket portions, recessed portions and projected portions for fixing, holding and engaging the constituent elements of the aforementioned means, other accessory components, their mounting members and so on by bending or curving a plate material of a specified thickness through a press work or the like.

As is well known, the above disk drive is required to have an extremely high accuracy with regard to the aforementioned means and assembled states of them in order to guarantee an accurate and smooth operation. Particularly, for example, with regard to the operation of loading the disk cartridge into the recording and reproducing position and the like, an interval between the magnetic head of the recording and reproducing unit and the disk cartridge must be highly accurately maintained to a setting value on the order of several microns (µm).

However, in the aforementioned prior art disk drive, the chassis constituting the mounting base of the principal constituent means is formed by the bending work or the like. Therefore, the forming process itself is complicated and hard to be performed, and the occurrence of a form error such as bending distortion is unavoidable. Therefore, the chassis itself is very hard to maintain the plane accuracy as a mounting reference plane of the aforementioned means, and a variety of adjustments are required for guaranteeing the high-accuracy operation of the disk drive while assuring the accuracy of the assembled states of the means. The above has led to the problem that much labor and time are necessary for the assembling work.

EP 0 666 562 A2 discloses a shifting and loading device for disc-shaped recording medium. This prior art device comprises a recording/reproducing unit, a loading member, a transport mechanism, a control mechanism and a chuck mechanism being positioned relatively to the disc on a chassis. The chassis itself is mounted to a base plate via several dampers. The disclosed device has several disadvantages, such as the manufacturing process being cost-intensive and requiring complicated handling apparatuses. Furthermore, a decrease of the dimensions of this device is limited by the minimum height, which has to be provided for the base plate and the chassis mounted thereon.

US 5,237,471 discloses an integrated driving system for signalprocessing devices. This prior art system includes several means, as above, being positioned on a chassis via an elongated cut portion. The chassis itself is mounted on a base plate. The such disclosed device shows the same disadvantages as the device disclosed in EP 0 666 562 A2.

### SUMMARY OF THE INVENTION

The present invention has been made in view of the aforementioned conventional technical problems and has an . object to simplify the construction of a chassis that serves as a mounting base for the principal constituent means of a disk drive and improve the dimensional accuracy and form accuracy of the chassis for the improvement of the productivity in the work of assembling the disk drive.

According to a first aspect, there is provided a disk drive comprising: a recording and reproducing means for recording information on the recording and/or reproducing medium encased in a disk cartridge or reproducing the information recorded on the medium; a holder means for guiding and holding the disk cartridge that is being inserted; a loading means capable of transferring the disk cartridge between a mounting and dismounting position where the disk cartridge can be mounted on and dismounted from the holder means and a recording and reproducing position of the recording and reproducing means; a drive means capable of driving the loading means; and a flat-plate-shaped chassis that serves as a mounting base for these means, the chassis being set to a specified thickness and having a base portion formed flatly throughout its entire surface except for a hole portion and/or a cut portion.

By adopting this constitution, the construction itself of the chassis is more substantially simplified than the prior art, and the dimensional (thickness) accuracy and form (flatness) accuracy are remarkably improved. Then, the accuracy of the assembled state of the principal constituent means can be very easily secured.

According to the present invention reflected in claim 1, based on the above first aspect, at least part of the hole portion and/or the cut portion is used for mounting the constituent elements of the means and/or other accessory components on the chassis, and the constituent elements and/or the other accessory components are mounted on the hole portion and/or the cut portion directly or via a mounting member. With this arrangement, the constituent elements of the above means and/or the other accessory components can be mounted on the chassis in a correctly positioned state without any trouble by means of at least part of the hole portion and/or the cut portion provided at the chassis.

Furthermore, according to a second aspect of the present invention, based on the above invention which is reflected in claim 1, the chassis has the base portion subjected to a leveling process throughout the entire surface thereof prior to the mounting of the constituent elements of the means and/or the other accessory components and/or their mounting members. By this leveling process, higher accuracies can be stably obtained with regard to the thickness dimension and flatness of the chassis.

Furthermore, according to a third aspect of the present invention, based on the above third second aspect of the present invention, the constituent elements of the means and/or the other accessory components and/or the mounting members are made of synthetic resin and are integrally formed with the chassis by outsert molding subsequently to the leveling process. By adopting this outsert molding, the mounting of the constituent elements of the means and/or the other accessory components and/or the mounting members on the chassis can be very efficiently performed with high accuracy.

In the first aspect, the flat-plate-shaped chassis serving as the mounting base of the principal constituent means is set to a specified thickness, and the base portion except for the hole portion and/or the cut portion is formed into a flat shape throughout the entire surface. Therefore, as compared with the conventional case of the formation by the bending process or the like, the construction itself of the chassis is substantially simplified, thereby allowing the dimensional (thickness) accuracy and form (flatness) accuracy to be remarkably improved. Then, the accuracy of the assembled state of the means can be very easily secured, so that the high-accuracy operation of the disk drive can be guaranteed without specifically necessitating troublesome adjustment or the like. As a result, the productivity in the work of assembling the disk drive can be remarkably improved.

Also, in the present invention, basically the same effect as that of the above first aspect can be produced. Particularly, at least part of the hole portion and/or the cut portion is used for mounting the constituent elements of the means and/or the other accessory components on the chassis, and the constituent elements and/or the other accessory components are mounted on the hole portion and/or the cut portion directly or via a mounting member. With this arrangement, the constituent elements of the above means and/or the other accessory components can be mounted on the chassis in the correctly positioned state without any trouble by using at least part of the hole portion and/or the cut portion provided at the chassis.

Furthermore, in the second aspect of the present invention, basically the same effect as that of the above present invention reflected in claim 1 can be produced. Moreover, the chassis has the base portion subjected to the leveling process throughout the entire surface prior to the mounting of the constituent elements of the means and/or the other accessory components and/or their mounting members. With this arrangement, higher accuracies can be stably obtained with regard to the thickness dimension and flatness of the chassis.

Furthermore, in the third aspect of the present invention, basically the same effect as that of the above second aspect of the present invention can be produced. Moreover, the constituent elements of the means and/or the other accessory components and/or their mounting members are made of synthetic resin and are integrally formed with the chassis by the outsert molding subsequently to the above leveling process. With this arrangement, the mounting of the constituent elements of the means and/or the other accessory components and/or the mounting members on the chassis can be very efficiently performed with high accuracy.

### BRIEF DESCRIPTION OF THE DRAWINGS

Fig. 1 is an overall perspective view of a disk drive according to an embodiment of the present invention;
Fig. 2 is an exploded perspective view of the holder unit and the chassis unit of the above disk drive;
Fig. 3 is an explanatory side view of the above disk drive in the assembled state;
Fig. 4 is an explanatory plan view of the above holder unit;
Fig. 5 is an explanatory plan view of the above chassis unit;
Fig. 6 is an explanatory plan view showing an associatede state in which a slider of the above holder unit is associated with a drive mechanism of the chassis unit;
Fig. 7 is an explanatory side view showing an associated state in which the slider of the above holder unit is associated with the drive mechanism of the chassis unit;
Fig. 8 is an explanatory side view showing an insertion start state when the above disk cartridge is being inserted into the holder;
Fig. 9 is an explanatory side view showing an insertion completed state when the above disk cartridge is inserted in the holder;
Fig. 10 is an explanatory side view showing a recording and reproducing enabled state when the above disk cartridge is inserted in the holder;
Fig. 11 is an explanatory plan view showing a lock lever disengaged state when the above disk cartridge is inserted in the holder;
Fig. 12 is an explanatory plan view showing a lock lever engaged state when the above disk cartridge is inserted in the holder;
Fig. 13 is an explanatory plan view showing the insertion completed state in which the above disk cartridge is inserted in the holder;
Fig. 14 is an explanatory plan view showing an operation state in which a main rack and a sub-rack operate in a disk cartridge mounting and dismounting position;
Fig. 15 is an explanatory plan view showing an operation state in which the main rack and the sub-rack operate in a disk cartridge insertion completed position;
Fig. 16 is an explanatory plan view showing an operation state in which the main rack and the sub-rack operate in a disk cartridge reproducible position;
Fig. 17 is an explanatory plan view showing an operation state in which the main rack and the sub-rack operate in a disk cartridge recordable position; and
Fig. 18 is an overall perspective view of the above disk cartridge.

### DETAILED DESCRIPTION OF THE PREFERRED EMBODIMENTS

Preferred embodiments of the present invention will be described in detail below with reference to the accompanying drawings.

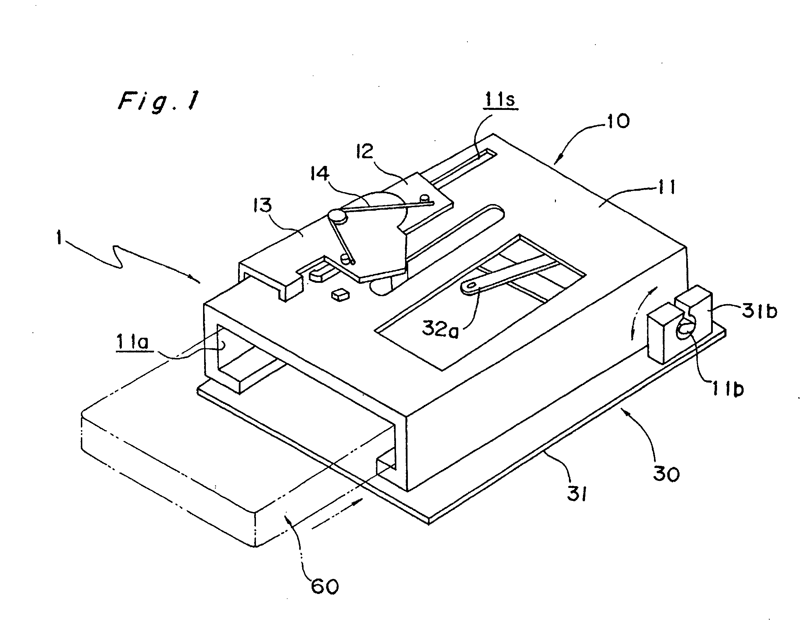

Fig. 1 is an overall perspective view of a disk drive 1 according to an embodiment of the present invention. As shown in this figure, the disk drive 1 (occasionally referred to simply as a "unit" hereinafter) is basically constructed of a holder unit 10 provided with a holder 11 for encasing and holding a disk cartridge 60 (occasionally referred to simply as a "cartridge" hereinafter) in which the so-called minidisk (MD) that serves as a recording and/or reproducing medium is encased and a chassis unit 30 provided with a flat-plate-shaped chassis 31 that serves as a mounting base for the principal constituent means of the unit 1. The holder unit 10 is supported pivotablly in the vertical direction with respect to the chassis unit 30 about a portion near the end portion on the side opposite to the cartridge insertion side, as described later.

The construction of these units 10 and 30 and the operation of the disk drive 1 will be successively described below.

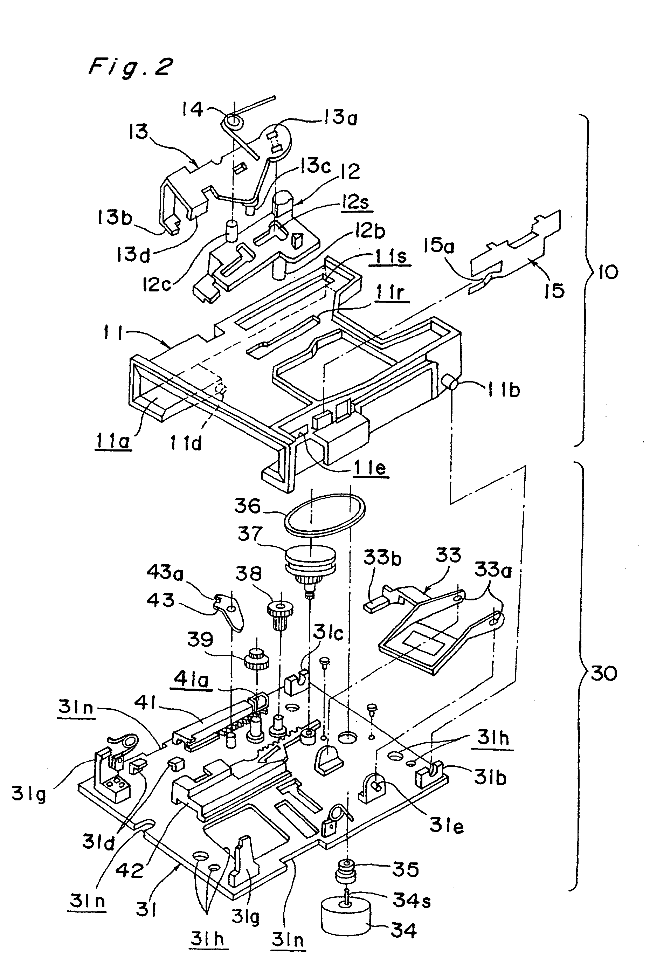

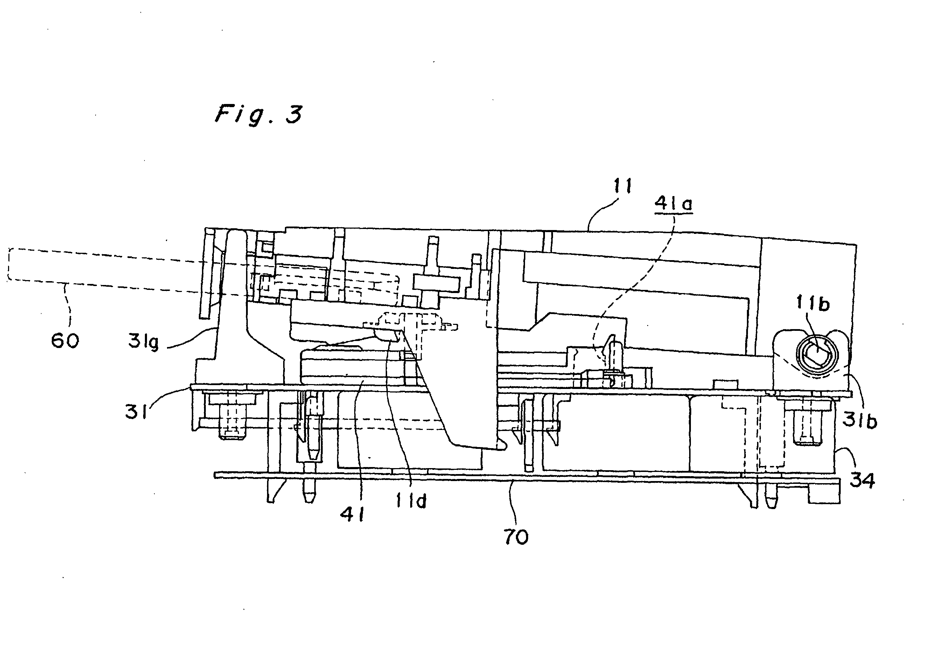

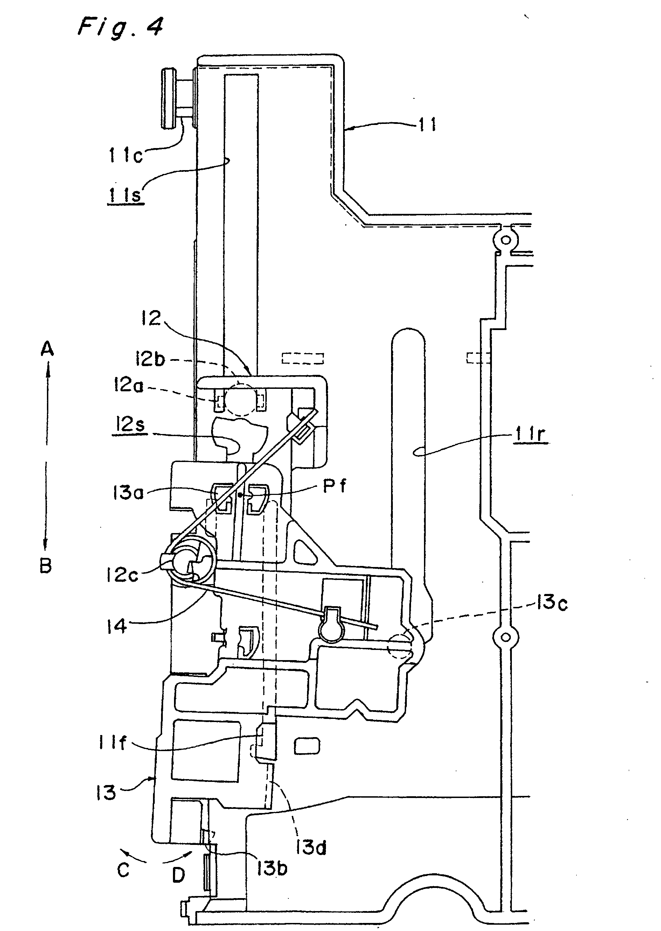

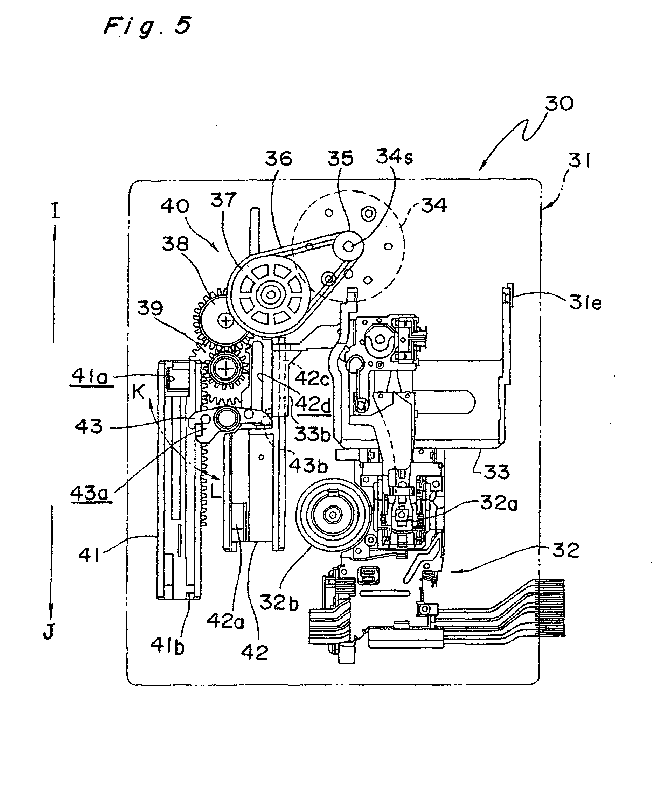

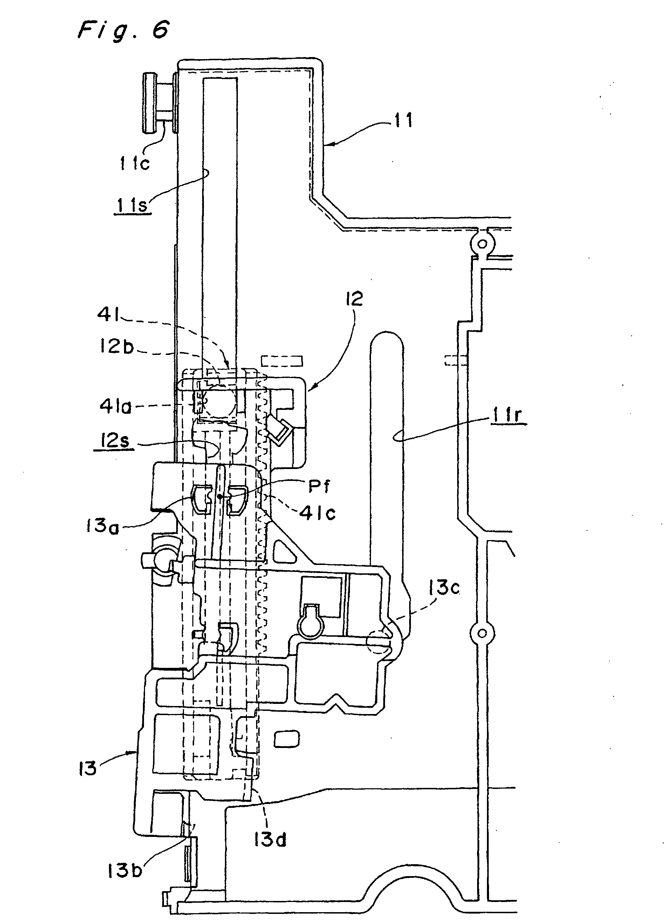

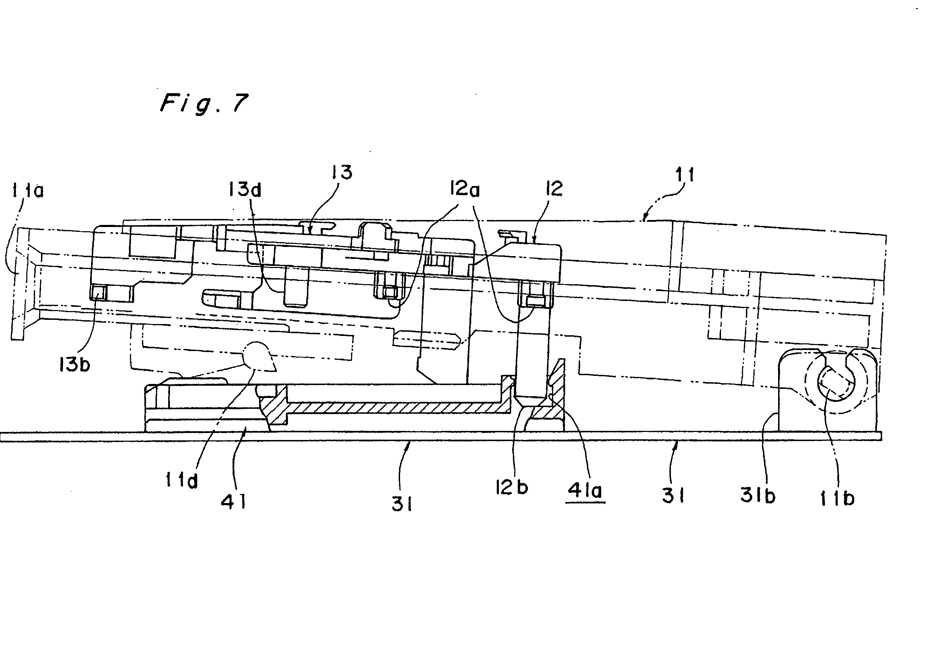

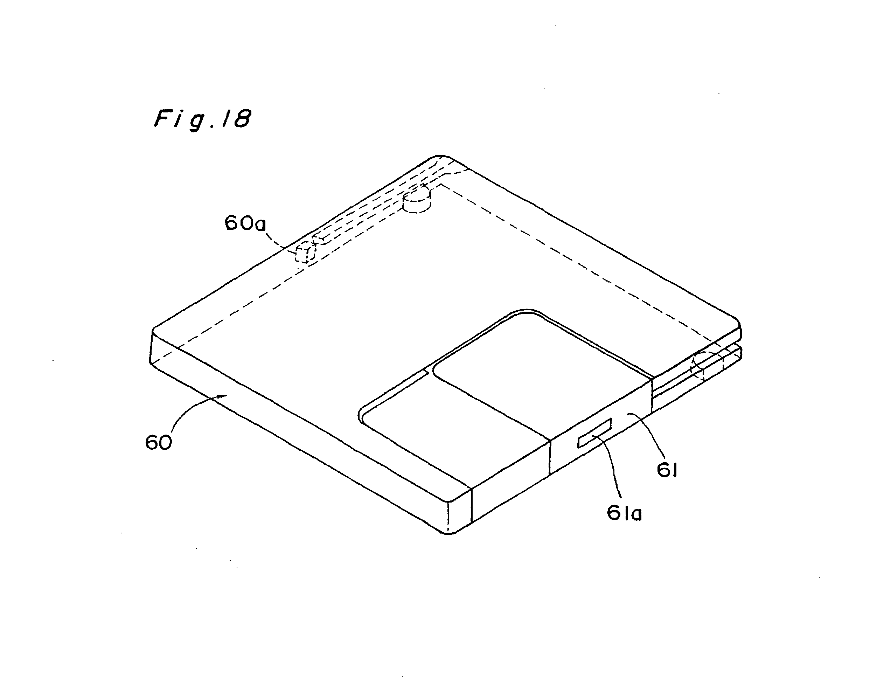

Fig. 2 is an exploded perspective view of the holder unit 10 and the chassis unit 30. Fig. 3 is an explanatory side view of the whole body of the disk drive in the assembled state. Fig. 4 is an explanatory plan view of the holder unit 10. Fig. 5 is an explanatory plan view of the chassis unit 30. Fig. 6 is an explanatory plan view showing an interlocked state in which a loading means of the holder unit 10 is associated with a drive mechanism of the chassis unit 30. Fig. 7 is an explanatory side view showing the interlocked state of Fig. 6. It is to be noted that the construction of the disk cartridge 60 is shown in the perspective view of Fig. 18.

The construction of the holder unit 10 will be described first.

This holder unit 10 has the holder 11 that serves as the main body of the holder unit 10 and guides, receives and holds the disk cartridge 60 that is being inserted, and this holder 11 is basically mounted with a slider 12 that transfers the disk cartridge 60 that is being inserted into the unit 1, a lock lever 13 for locking and unlocking the disk cartridge 60 that is being inserted with respect to the slider 12 and a shutter opener 15 for opening and closing a shutter 61 of the cartridge 60. It is to be noted that the holder 11 corresponds to the holder means stated in the claims of the present application.

The holder 11 has one end provided with an opening 11a for receiving the disk cartridge 60 and the other end provided with a pair of pivot pins 11b and 11c (only the pivot pin 11b on one side is shown in Fig. 1 and Fig. 2) that serve as pivots for a pivoting operation in the vertical direction of the holder 11 while projecting laterally outward.

The bottom surface of the holder 11 is provided with an engagement projection 11d to be engaged with a drive mechanism capable of driving a loading means including the slider 12 as described later. It is to be noted that the drive mechanism is provided on the chassis unit 30.

The slider 12 has a hook portion 12a (see Fig. 4) on the lower surface side, and this hook section 12a is slidably engaged with an elongated groove 11s cut in the holder 11. This elongated groove 11s extends in a direction in which the cartridge 60 is inserted or ejected (the direction of arrow A/B shown in Fig. 4), and the hook section 12a (i.e., the slider 12) can move in the above direction (direction A/B) within the range of this elongated groove 11s.

The disk cartridge 60 being inserted from the holder opening 11a is transferred into the unit 1 in accordance with the movement of this slider 12.

The slider 12 is provided with an engagement pin 12b that has a specified length and extends downward, and as described later, this engagement pin 12b comes into engagement with the drive means on the chassis unit 30 side.

It is to be noted that this slider 12 is to transfer the disk cartridge 60 between the mounting and dismounting position where the cartridge can be mounted and dismounted from the holder 11 and an insertion completed position where the cartridge is completely positioned with respect to the holder 11, constituting part of the loading means capable of transferring the cartridge between the above mounting and dismounting position and a recording and reproducing position of the recording and reproducing unit (described later) as disclosed in the claims of the present application.

The lock lever 13 has a hook portion 13a on the lower surface side, and this hook portion 13a is slidably engaged with an elongated groove 12s cut in the slider 12. This elongated groove 12s extends in the insertion/ejection direction (direction A/B, see Fig. 4) of the cartridge 60 in a state in which the slider 12 is assembled with the holder 11. The hook portion 13a (i.e., the lock lever 13) is able to move in the above direction (direction A/B) within the range of this elongated groove 12s and is able to pivot around a center Pf of the hook portion 13a (i.e., in the direction of arrow C/D shown in Fig. 4).

This lock lever 13 is always urged in the direction of arrow C by a spring 14 (lock lever spring) mounted around a pin 12c projecting on the upper surface side of the slider 12. Further, a lock pawl 13b for pulling and retaining the cartridge 60 is provided on the leading end side of the lock lever 13 while being engaged with a side recess 60a provided on one side surface of the disk cartridge 60.

The shutter opener 15 has an engagement hook portion 15a to be engaged with a shutter hole 61a bored in the shutter 61 of the disk cartridge 60 and is mounted and fixed relatively close to the cartridge insertion side end portion of the side portion of the holder 11.

On a side portion of this holder 11 is formed a window 11e relatively close to the cartridge insertion side end portion, and the shutter opener 15 is mounted so that its hook portion 15a projects inwardly of the window 11e.

When the disk cartridge 60 is inserted from the opening 11a into the holder 11, the engagement hook portion 15a of the shutter opener 15 comes into engagement with the shutter hole 61a of the cartridge 60, by which the shutter 61 is opened in accordance with the progress of the inserting operation of the cartridge 60.

The chassis unit 30 will be described next.

This chassis unit 30 is provided with a flat-plate-shaped chassis 31 that serves as the mounting base of the principal constituent means of the disk drive 1, and this flat-plate-shaped chassis 31 is mounted with a recording and reproducing unit 32 for recording information on a recording and/or reproducing medium encased in the disk cartridge 60 or reproducing the information recorded on the medium, a head shifter 33 for vertically moving a magnetic head 32a of the recording and reproducing unit 32, a drive mechanism capable of driving the loading means including the slider 12 provided for the holder unit 10 and so on.

As described above, the holder 11 is also supported pivotally around the pivot pins 11b and lic provided at the end portion oppositely to the opening side in the vertical direction with respect to the flat-plate-shaped chassis 31.

The flat-plate-shaped chassis 31 is obtained by cutting a steel plate material of, for example, a specified thickness into a specified planar shape (rectangular shape in the present embodiment) by a shearing process or the like and punching a plurality of holes 31h and cut portions 31n through specified portions of the plate material. The plate material is subjected to neither bending process nor emboss process, and therefore, the planar portion remains flat.

According to the present embodiment described above, the flat-plate-shaped chassis 31 is set to a specified thickness and the base portion except for the hole 31h and the cut portion 31n is formed flat throughout the entire surface. Therefore, as compared with the conventional case of the bending process or the like, the construction itself of the chassis 31 is substantially simplified, thereby allowing the dimensional (thickness) accuracy and form (flatness) accuracy to be remarkably improved. Then, the accuracy of the assembled state of the means can be very easily assured, so that the high-accuracy operation of the disk drive 1 can be guaranteed without specifically necessitating troublesome adjustment or the like. As a result, the productivity in the assembling work of the disk drive 1 can be remarkably improved.

At least part of the plurality of holes 31h and/or the cut portions 31n is used for mounting (fixing, supporting or engaging) the constituent elements of the principal constituent means or the other accessory components on the chassis 31, where the constituent elements or the other accessory components are mounted on the specified holes 31h and/or the cut portions 31n directly or via a mounting member.

As described above, the constituent elements of the means or the other accessory components are mounted on the chassis without any trouble in the correctly positioned state by utilizing at least part of the holes 31h and/or the cut portions 31n provided at the chassis.

It is to be noted that the remaining holes 31h and/or the cut portions 31n, being not used for the mounting of the constituent elements of the means and/or the other accessory components play the role of reducing the weight of the flat-plate-shaped chassis 31 as, for example, through holes 31h and/or cut portions 31n.

In the present embodiment, prior to the mounting of the constituent elements of the principal constituent means and/or the other accessory components and/or the their mounting members, the base portion of the flat chassis 31 except for the holes 31h and the cut portions 31n is subjected to the so-called leveling process. As is well known, this leveling process uses a leveling unit (the so-called leveler) provided with a pair of pressure rollers arranged at specified regular intervals and controls the thickness dimension and flatness of the plate material with extremely high accuracy by leveling the thickness and surface of the plate material by making the plate pass through the space between the pressure rollers. By subjecting the chassis 31 to this leveling process, the thickness dimension and the flatness of the chassis 31 can be stably controlled with higher accuracy.

Furthermore, in the present embodiment, the constituent elements of the means and/or the other accessory components and/or their mounting members are made of synthetic resin and are integrally formed with the chassis 31 by outsert molding subsequently to the leveling process.

This outsert molding is to integrally form the mounting holes 31h and/or cut portions 31n of the chassis 31 with the specified components by preparing a pair of molds provided with a molding cavity corresponding to the necessary components (the constituent elements of the means and/or the other accessory components and/or their mounting members), putting the molds close to each other with the chassis 31 interposed between these molds and injecting molten resin into the molding cavity. By this process, the mounting of the constituent elements of the means and/or the other accessory components and/or their mounting members on the chassis 31 can be very efficiently performed with high accuracy without specifically impairing the dimensional accuracy and form accuracy of the chassis 31.

Instead of such an outsert molding, it is acceptable to mount the necessary components on the corresponding mounting holes 31h and/or the cut portions 31n by screwing or "caulking" or the like.

The leveling process and outsert molding are similar to those which have been conventionally well known, and therefore, neither detailed description nor illustration thereof is provided for the processes.

On the one end side of the flat-plate-shaped chassis 31 are provided bearing portions 31b and 31c for supporting the pivot pins 11b and 11c of the holder 11. The holder 11 can pivot in the vertical direction with respect to the flat-plate-shaped chassis 31 with the pivot pins 11b and 11c supported by the bearing portions 31b and 31c.

The bearing portions 31b and 31c have their upper portions opening upward, so that the pivot pins 11b and 11c of the holder 11 can be very easily (with a one-touch motion) fitted into the bearing portions from the opening for the assembling.

As an example of the mounting member disclosed in the claims of the present application, the bearing portions 31b and 31c can be enumerated. As an example of the other accessory components, a pair of plate-shaped engagement members 31g that are provided on one end side of the chassis 31 and extend upward as shown in Fig. 2 can be enumerated. The engagement members 31g are to engage the holder 11 in the assembled state with the chassis 31.

An electric motor 34 for driving the loading means is fixed by a screw member on the lower surface side of the chassis 31 as described later. On the output side of the electric motor 34 is provided an output transmission mechanism 40 (see Fig. 5) for transmitting the rotation of the electric motor 34 while reducing the rotating speed. Below the chassis 31 is arranged a control board 70 (see Fig. 3) on which a control circuit of the disk drive 1 is formed, and the electric motor 34 is electrically connected to this control board 70.

The output transmission mechanism 40 is constructed of a motor pulley 35 to be fixed on an output shaft 34s of the electric motor 34, a power transmission belt 36, a pulley gear 37, an intermediate gear 38, a drive gear 39 and so on. The output of the electric motor 34 is transmitted via the motor pulley 35 and the power transmission belt 36 to the pulley gear 37 and thereafter transmitted to the drive gear 39 via the intermediate gear 38 meshed with a lower gear of the pulley gear 37.

On both sides of the drive gear 39, in terms of plan view, a pair of rack members (main rack 41 and sub-rack 42) having a toothed portion capable of meshing with the drive gear 39 are arranged opposite to each other, and both the racks 41 and 42 are slidably held and guided on the chassis 31 by a plurality of guide hooks 31d (see Fig. 2). With the rotation of the drive gear 39 as described later, the racks can move in the direction of arrow I/J shown in Fig. 5.

A side cam portion 42a is formed on the upper surface of the side portion on the leading end side of the sub-rack 42, and as described later, this side cam portion 42a comes into engagement with the engagement projection 11d of the holder 11 according to the operation state of the disk drive 1.

An engagement pin 12b provided at the slider 12 on the holder unit 10 side is engaged from above with a recess 41a formed on one end side of the main rack 41.

In the present embodiment, when assembling the holder unit 10 with the chassis unit 30 in the assembling process of the disk drive 1, more preferably, basically only the engagement pin 12b of the slider 12 is to be engaged with the recess 41a of the main rack 41.

Therefore, by individually sub-assembling the holder unit 10 and the chassis unit 30 and thereafter fitting the pivot pins 11b and 11c of the holder 11 into the bearing portions 31b and 31c of the chassis 31 in a state in which the engagement pin 12b is preparatorily positioned with respect to the recess 41a of the main rack 41, the holder unit 10 can be assembled very easily (with a one-touch motion) with the chassis unit 30.

Further, between both the rack members 41 and 42 is arranged a switch lever 43 capable of coming into engagement with both the members. The switch lever 43 switches over between the main rack 41 and the sub-rack 42 to be used as the counterpart of engagement of the drive gear 39, and the switch lever 43 is pivotally supported in the direction K/L (see the arrow of the one-dot chain line in Fig. 5) on the chassis 31.

If a projection 41b of the main rack 41 comes into engagement with a recess 43a provided at one end of the switch lever 43 to thereby pivot the switch lever 43 in the direction K (see Fig. 5) in accordance with the shift from the state in which the toothed portion of the main rack 41 is engaged with the drive gear 39 in the direction I (see Fig. 5) of the main rack 41, then the sub-rack 42 starts to operate to mesh the toothed portion thereof with the drive gear 39 since a pin 43b provided on the other end side of the switch lever 43 is engaged with a cam groove 42d of the sub-rack 42.

Consequently, if the main rack 41 moves in the direction I, then the sub-rack 42, which has been stopped, is moved in the direction J by the switch lever 43 in the vicinity of the terminal end of the movement.

The head shifter 33 can arbitrarily pivot in the vertical direction since a pair of pins 31e of the chassis 31 are inserted in a pair of holes 33a (see Fig. 2) provided on the rear side of the head shifter 33. Then, by this pivot operation, the magnetic head 32a of the recording and reproducing unit 32 are pivoted in the vertical direction. Below a side of this magnetic head 32a is positioned a turntable 32b.

On the side portion of the head shifter 33 is provided an arm 33b which is placed on an upper cam portion 42c of the sub-rack 42, and the arm 33b moves on the upper cam portion 42c while being linked with the operation of the sub-rack 42, by which the arm 33b (i.e., the head shifter 33) pivots in the vertical direction.

The pair of pins 31e (see Fig. 2) that support the head shifter 33 pivotally in the vertical direction while being engaged with the holes 33a of the head shifter 33, the pair of bearing portions 31b and 31c (see Fig. 2) that support the holder 11 pivotally in the vertical direction while receiving the pivot pins 11b and 11c of the holder 11 and the plurality of guide hooks 31d (see Fig. 2) that slidably hold and guide the main rack 41 and the sub-rack 42 on the chassis 31 are the mounting members for mounting the principal constituent means of the disk drive 1 on the chassis 31. As is clearly shown in Fig. 2, the chassis 31 is mounted with the constituent elements of the means of the disk drive 1 or the other accessory components or mounting members for mounting these components on the chassis 31 besides the above components.

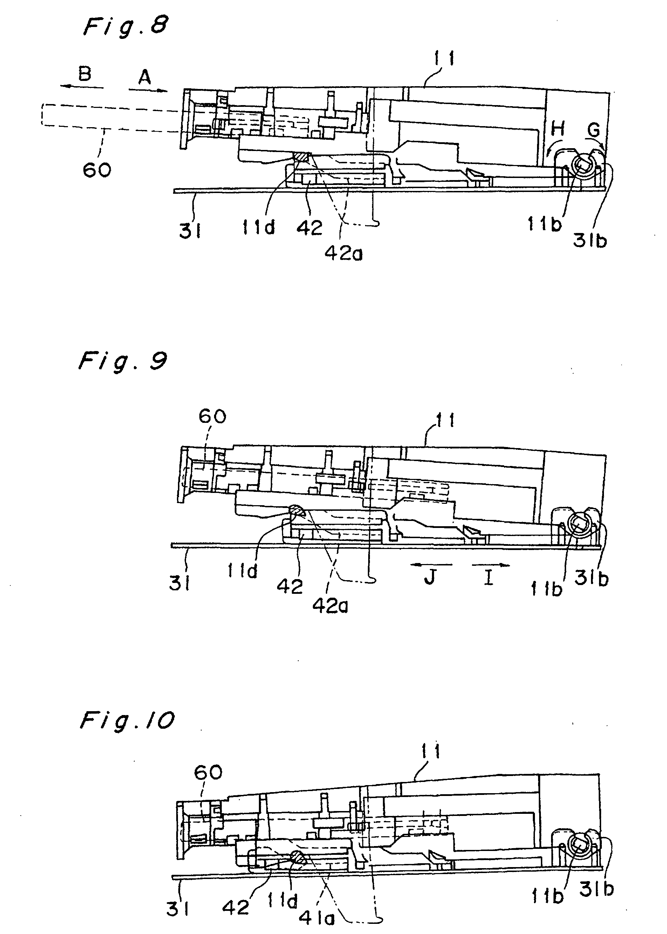

The basic operation in inserting the disk cartridge 60 into the holder 11 will be described next. Figs. 8 through 10 are explanatory side views of the disk cartridge 60 and the disk drive 1, for explaining a sequence of operation in executing recording and reproducing by inserting the disk cartridge 60 into the holder 11. Figs. 8, 9 and 10 show an insertion start (mounting and dismounting) position, an insertion completed (closing completed) position and a recording and reproducing position, respectively.

First, if the cartridge 60 is inserted from the mounting and dismounting position (see Fig. 8) into the holder 11, then the cartridge 60 is transferred from the mounting and dismounting position to the insertion completed position (Fig. 9) by the slider 12.

Then, the sub-rack 42 of the drive means starts to move in the direction J (see Fig. 5). By this operation, the engagement projection 11d of the holder 11 comes into engagement from above with the side cam portion 42a of the sub-rack 42 and moves downward along this side cam portion 42a. This operation pivots the holder 11 in the direction H shown in Fig. 8 and moves the disk cartridge 60 into the recording and reproducing position (see Fig. 10), thereby putting the same into a recording and reproducing state.

That is, the disk cartridge 60 moves from the state of Fig. 8 via the state of Fig. 9 to the state of Fig. 10, and vice versa.

It is to be noted that the slider 12, the lock lever 13, the engagement projection 11d of the holder 11 and the side cam portion 42a of the sub-rack 42 constitute the loading means disclosed in the claims of the present application. That is, the principal portion of the loading means except for the side cam portion 42a is entirely mounted on the holder unit 10.

The electric motor 34, the output transmission mechanism 40, the main rack 41, the sub-rack 42 and the switch lever 43 constitute the drive means disclosed in the claims of the present amplification, and these members are all mounted on the chassis unit 30.

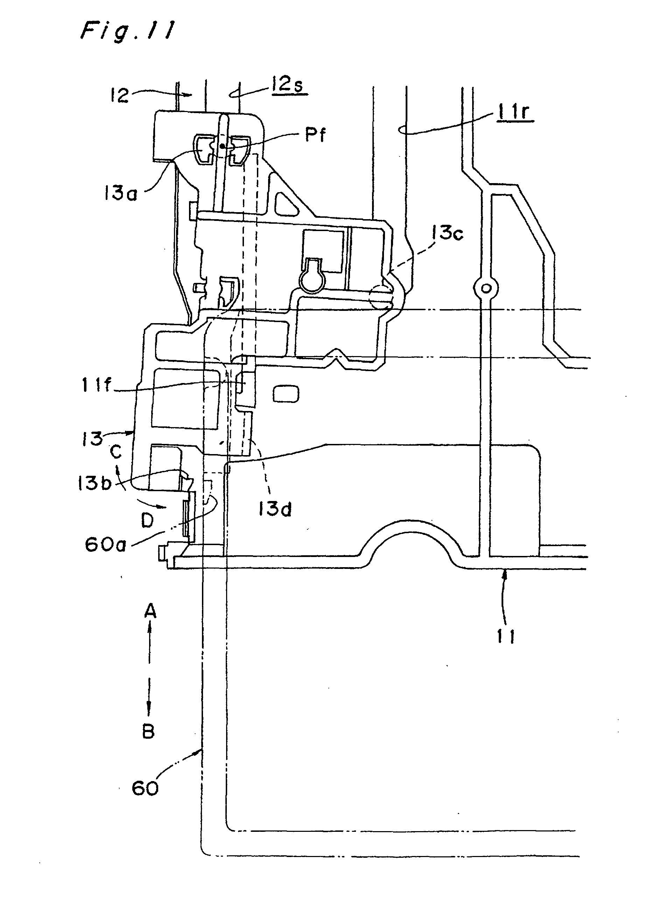

The loading operation of the disk cartridge 60 will be described in more detail below with reference to Fig. 11 through Fig. 13.

If the cartridge 60 is manually inserted into the opening 11a of the holder 11 in the direction A in the mounting and dismounting position (corresponding to the Fig. 8 described above) of the disk cartridge 60 shown in Fig. 11, then the end surface of the cartridge 60 abuts against a cartridge receiving pin 13c of the lock lever 13, thereby making the lock lever 13 pivot in the direction of arrow D. By this operation, the lock pawl 13b of the lock lever 13 comes into engagement with a side recess 60a of the cartridge 60. In this stage, the further pivoting of the lock lever 13 in the direction D is prevented by the engagement of the lock pawl 13b with the side recess 60a of the cartridge 60.

It is to be noted that the cartridge receiving pin 13c is received in a guide groove 11r cut in the holder 11 while being able to freely slide within the range of this guide groove llr.

When the disk cartridge 60 is further inserted in the direction A, a trigger switch (not shown) for issuing instructions for operating the drive means operates, thereby transferring the cartridge 60 further in the direction A via the loading means. It is to be noted that the trigger switch is electrically connected to the control board 70.

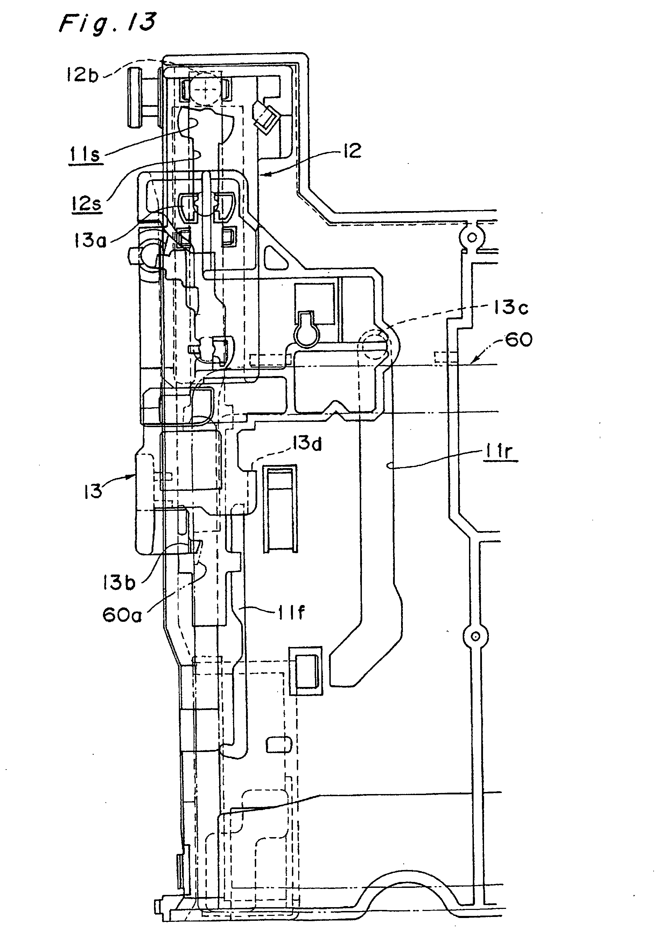

Fig. 13 is a plan view (corresponding to Fig. 9 described above) showing the closing completed (insertion completed) state of the cartridge 60. In this closing completing operation, a regulating rib 11f of the holder 11 comes into engagement with a guide pawl 13d of the lock lever 13, and the guide pawl 13d slides along the regulating rib 11f, thereby preventing the lock lever 13 from pivoting in the direction C and securely transferring the cartridge 60 in the direction A.

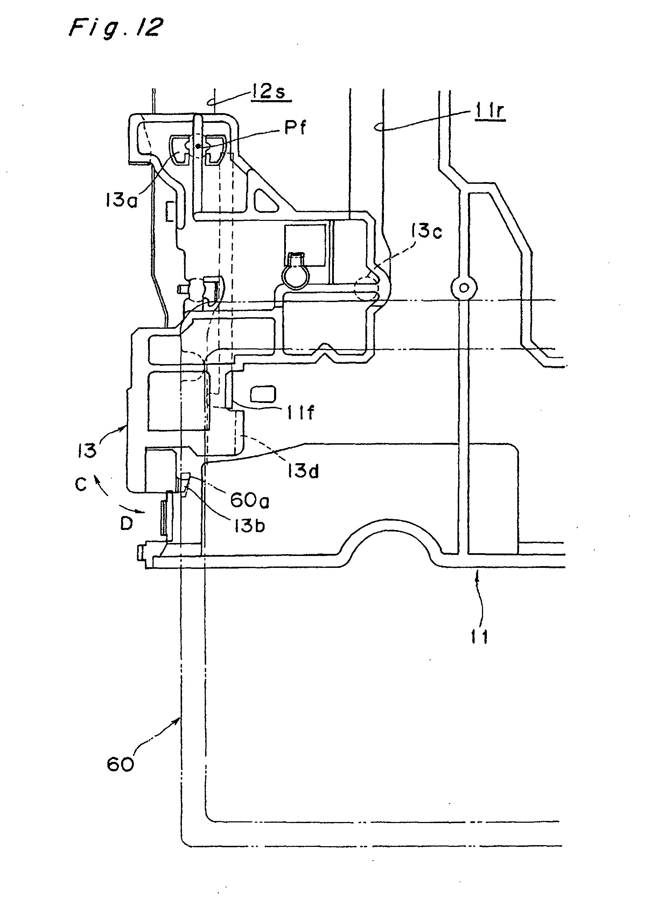

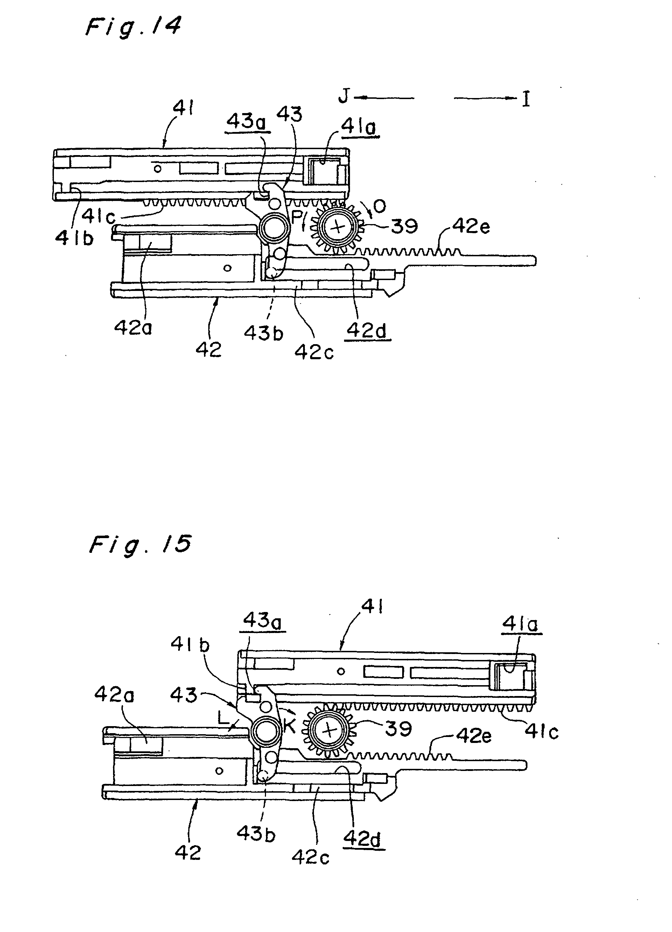

When the cartridge 60 is further pushed in the direction A from the state of Fig. 12 described above, the trigger switch (not shown) for issuing the instructions for operating the drive means operates. By this operation, the electric motor 34 starts to rotate, with which the drive gear 39 starts to rotate in the direction of arrow O as shown in Fig. 14 successively via the motor pulley 35, power transmission belt 36, pulley gear 37 and intermediate gear 38, which serve as a speed reducing system constituting the output transmission mechanism 40. Then the drive gear 39 comes into meshing engagement with the toothed portion 41c provided on the main rack 41, thereby moving the main rack 41 in the direction of arrow I.

In this stage, the engagement pin 12b of the slider 12 is engaged with the recess 41a of the main rack 41. Therefore, the lock lever 13 placed on the slider 12 moves, by which the cartridge 60 engaged with the lock pawl 13b of the lock lever 13 moves in the direction A. It is to be noted that the sub-rack 42 is in the stopped state in this stage, when its toothed portion 42e does not mesh with the drive gear 39.

The main rack 41 further advances in the direction I from this state, and when the main rack advances to the specified position shown in Fig. 15 (a position corresponding to the insertion completed position of the disk cartridge 60 in the holder 11), the projection 41b of the main rack 41 comes into engagement with the recess 43a of the switch lever 43, thereby pivoting the switch lever 43 in the direction K (see Fig. 15). By this operation, the pin 43b provided at one end of the switch lever 43 pushes the cam groove 42d of the sub-rack 42 in the direction J, by which the sub-rack 42 starts to slide in the same direction (i.e., the direction opposite to the direction in which the main rack 41 slides).

Next, when the main rack 41 further advances in the direction I, the toothed portion 42e of the sub-rack 42 comes into meshing engagement with the drive gear 39, and thereafter, the toothed portion 41c of the main rack 41 is disengaged from the drive gear 39.

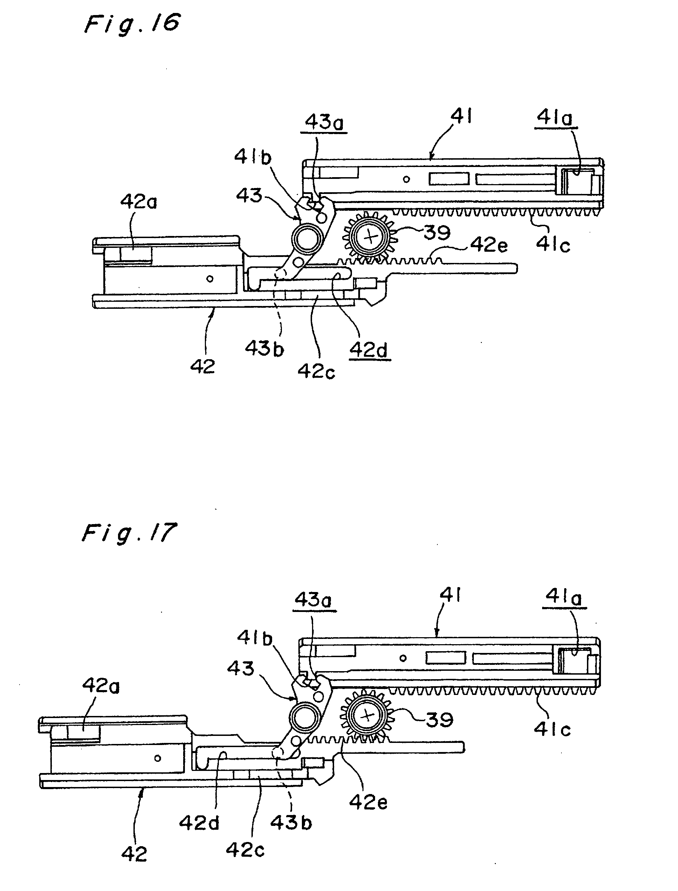

Then, the sub-rack 42 further moves in the direction J with the pivoting of the drive gear 39 and reaches the specified position (position corresponding to the recording and reproducing position of the cartridge 60) shown in Fig. 16.

By this operation, the engagement projection 11d of the holder 11 comes into engagement from above with the side cam portion 42a of the sub-rack 42 and slides along the side cam portion 42a, by which the cartridge 60 is loaded into the recording and reproducing position shown in Fig. 10.

When the sub-rack 42 further advances in the direction J, the head shifter 33 pivots downward since the arm 33b provided on one side surface of the head shifter 33 is engaged from above with an upper surface cam portion 43c of the sub-rack 42 (i.e., positioned on the upper surface cam portion 43c), by which the magnetic head 32a of the recording and reproducing unit 32 is made to pivot downward to be set into the recording enabled state (see Fig. 17).

## Claims

1. A disk drive(1) comprising: a recording and reproducing means(32) for recording information on the recording and/or reproducing medium encased in a disk cartridge(60) or reproducing the information recorded on the medium; a holder means(11) for guiding and holding the disk cartridge(60) that is being inserted; a loading means(11d,12,13 and 42a) capable of transferring the disk cartridge(60) between a mounting and dismounting position where the disk cartridge(60) can be mounted on and dismounted from the holder means(11) and a recording and reproducing position of the recording and reproducing means(32); a drive means(34,40,41,42 and 43) capable of driving the loading means(11d,12,13 and 42a); and a flat-plate-shaped chassis(31) that serves as a mounting base for those means, the chassis(31) being set to a specified thickness and having a base portion formed flatly throughout its entire surface except for a hole portion(31h) and/or a cut portion(31n),wherein at least part of the hole portion(31h) and/or the cut portion(31n) is used for mounting the constituent elements of the means and/or other accessory components on the chassis, and the constituent elements and/or the other accessory components are mounted on the hole portion(31h) and/or the cut portion(31n) directly or via a mounting member.

2. A disk drive(1) as claimed in claim 1, wherein the chassis(31) has the base portion subjected to a leveling process throughout the entire surface thereof prior to the mounting of the constituent elements of the means and/or the other accessory components and/or their mounting members.

3. A disk drive(1) as claimed in claim 2, wherein the constituent elements of the means and/or the other accessory components and/or the mounting members are made of synthetic resin and are integrally formed with the chassis(31) by outsert molding subsequently to the leveling process.

## Patentansprüche

1. Disklaufwerk, enthaltend: ein Aufzeichnungs- und Wiedergabemittel (32) zum Aufzeichnen von Informationen auf einem Aufzeichnungsund/oder Wiedergabemedium, welches in einer Diskkassette (60) aufgenommen ist, oder zur Wiedergabe der Informationen, die auf dem Medium aufgezeichnet sind; ein Haltemittel (11) zum Führen und Halten der eingeführten Diskkassette (60); ein Lademittel (11d, 12, 13 und 42a), welches in der Lage ist, die Diskkassette (60) zwischen einer Aufnahme- und Entnahmestellung, in der die Diskkassette (60) von dem Haltemittel (11) aufgenommen und von dem Haltemittel (11) entnommen werden kann, und einer Aufzeichnungs- sowie Wiedergabestellung des Aufzeichnungs- und Wiedergabemittels (32) zu verfahren; ein Antriebsmittel (34, 40, 41, 42 und 43), welches in der Lage ist, das Lademittel (11d, 12, 13 und 42a) zu verfahren; und ein Chassis (31) in Form einer flachen Platte, das als eine Montagebasis für diese Mittel dient, wobei das Chassis (31) auf eine bestimmte Dicke eingestellt ist und ein Basisabschnitt aufweist, der über seine gesamte Oberfläche mit Ausnahme eines Lochabschnitts (31h) und/oder eines Einschnittabschnitts (31n) flach ausgebildet ist, wobei zumindest ein Teil des Lochabschnitts (31h) und/oder des Einschnittabschnitts (31n) zur Montage der Hauptelemente der Mittel und/oder anderer Hilfsbauteile auf dem Chassis verwendet wird und wobei die Hauptelemente und/oder die anderen Hilfsbauteile an dem Lochabschnitt (31h) und/oder dem Einschnittabschnitt (31n) unmittelbar oder über ein Montageelement angebracht sind.

2. Disklaufwerk (1) nach Anspruch 1, bei dem das Chassis (31) den Basisabschnitt aufweist, der einem Nivellierungsvorgang über seine gesamte Oberfläche vor der Montage der Hauptelemente der Mittel und/oder anderer Hilfsbauteile und/oder ihrer Montageelemente unterworfen wird.

3. Disklaufwerk (1) nach Anspruch 2, bei dem die Hauptelemente der Mittel und/oder die anderen Hilfsbauteile und/oder die Montageelemente aus einem Kunstharz hergestellt sind und einstückig mit dem Chassis (31) durch ein Outsert-Formgebungsverfahren im Anschluss auf den Nivellierungsvorgang gebildet sind.

## Revendications

1. Entraînement de disque (1) comprenant : un moyen d'enregistrement et de reproduction (32) destiné à enregistrer des informations sur le support d'enregistrement et/ou de reproduction enfermé dans une cartouche de disque (60) ou à reproduire les informations enregistrées sur le support ; un moyen de maintien (11) destiné à guider et à maintenir la cartouche de disque (60) en cours d'insertion ; un moyen de chargement (11d, 12, 13 et 42a) capable de transférer la cartouche de disque (60) entre une position de montage et de démontage où la cartouche de disque (60) peut être montée et démontée du moyen de maintien (11) et une position d'enregistrement et de reproduction du moyen d'enregistrement et de reproduction (32) ; un moyen d'entraînement (34, 40, 41, 42 et 43) capable d'entraîner le moyen de chargement (11d, 12, 13 et 42a) ; et un châssis en forme de plaque plate (31) qui sert de base de montage pour ces moyens, le châssis (31) étant prévu à une épaisseur spécifiée et comportant une partie de base formée carrément sur la totalité de sa surface excepté pour une partie de trou (31h) et/ou une partie de découpe (31n), dans lequel au moins une partie de la partie de trou (31h) et/ou de la partie de découpe (31n) est utilisée pour le montage des éléments constituant les moyens et/ou les autres composants accessoires sur le châssis, et les éléments constituants et/ou les autres composants accessoires sont montés sur la partie de trou (31h) et/ou la partie de découpe (31n) soit directement, soit via un élément de montage.

2. Entraînement de disque (1) selon la revendication 1, dans lequel le châssis (31) comporte la partie de base soumise à un processus de nivellement à travers sa surface entière avant le montage des éléments constituants des moyens et/ou des autres composants accessoires et/ou de leurs éléments de montage.

3. Entraînement de disque (1) selon la revendication 2, dans lequel les éléments constituants des moyens et/ou des autres composants accessoires et/ou des éléments de montage sont composés de résine synthétique et sont formés solidairement avec le châssis (31) par moulage extérieur à la suite du processus de nivellement.
